# EUROPEAN PATENT APPLICATION

(11) **EP 4 497 591 A1**
(43) Date of publication of application: **29.01.2025**
(21) Application number: 23187818.2
(22) Date of filing: 26.07.2023
(51) Int. Cl.: B32B 17/00, B32B 17/10, E06B 9/24

(54) **MULLTIFUNCTIONAL SMART WINDOW**

(71) Applicant: Valstybinis Moksliniu Tyrimu Institutas Fiziniu Ir Technologijos Mokslu Centras, 02300 Vilnius (LT)
(72) Inventor: RATAUTAS, Karolis, 02300 Vilnius (LT); RACIUKAITIS, Gediminas, 02300 Vilnius (LT); GECYS, Paulius, 02300 Vilnius (LT); SADAUSKAS, Modestas, 02300 Vilnius (LT); DUDUTIS, Juozas, 02300 Vilnius (LT); INDRISIUNAS, Simonas, 02300 Vilnius (LT)
(74) Representative: Draugeliene, Virgina Adolfina

(57) **Abstract**

The invention presents a smart window, incorporating several functions with enhanced transmission to mobile and wireless communication wavelength through low-emission glazing, window transparency dimming and integrated micro-LED (Light-Emitting Diode) arrays for illumination and presentation of visual content. The use of energy-efficient glazing, including low-emissivity coatings, further enhances the energy-saving properties of the window. Laser-based methods are applied in inscribing resonant antennas in the metallic low-emissivity coating, enabling selective transmission of mobile frequency bands; inscribing light-scattering elements inside glass pane to control light propagation; and forming electrically conductive tracks on glass surfaces for micro-LED assembly. The invention offers a comprehensive solution for smart and energy-efficient windows allowing increasing the efficiency and functionality of the multifunctional smart window while simplifying its design and manufacturing process. The integration of micro-LED arrays onto the glass surface of a window enables the display of customizable visual content, controlled remotely through a mobile phone or other means.

## Description

### Technical field of the invention

The present invention relates to the field of smart windows, particularly those incorporating several functions with enhanced transmission to mobile and wireless communication wavelength through low-emission glazing, window transparency dimming and integrated micro-LED (Light-Emitting Diode) arrays for illumination and presentation of visual content. Smart windows technology combines traditional building components with advanced electronic systems to offer enhanced functionality and energy-saving efficiency. The integration of micro-LED arrays onto the glass surface of a window enables the display of customizable visual content, controlled remotely through a mobile phone or other means. The use of energy-efficient glazing, including low-emissivity coatings, further enhances the energy-saving properties of the window. This invention addresses the challenges of forming electrically conductive tracks on glass surfaces, enables selective transmission of mobile frequency bands, and provides light-scattering structures to control light propagation, thereby offering a comprehensive solution for smart and energy-efficient window systems.

### Background of invention

Smart windows should be energy-efficient, therefore special glazing is applied. Low-emissivity (low-E) windows have a thin, transparent coating applied to the glass surface that helps to reflect heat and infrared radiation while allowing visible light to pass through. However, a thin metal film on glass, used to discriminate visible and thermal parts of solar radiation, even of a few tens of nanometers thick, being transparent in the visible spectrum, significantly attenuates the propagation of electromagnetic waves in the GHz-THz range, where wireless, 5G and 6G mobile networks are operating. That poses a great challenge in the modern construction industry. The compromise between low-E properties and functionality in the communication wavelength range could be achieved by patterning the metal film and creating resonant antennas transmitting mobile network wavelength through glazing.

JP2014076624A·(2014-04-03) provides a low-emission window material with excellent optical properties affecting the appearance, having a reflection colour tone ranging from an achromatic colour to blue colour without glittering reflection, and excellent heat shielding properties without spoiling the transparency. A window material to separate the indoor from the outdoor includes a low emission film having a laminate of dielectric layers and metal layers mainly composed of Ag laminated in the order of a first dielectric layer, a first metal layer, a second dielectric layer, a second metal layer, and a third dielectric layer formed on a transparent substrate. The transparent substrate surface of the low-emission transparent substrate contacts with the outdoor space. The low-emission transparent substrate has the following optical properties. The primary advantages of low-E windows include improved energy efficiency, enhanced comfort, UV protection and glare reduction.

However, metal-based coating on low-emission windows blocks the connection of the mobile phone. And there is no decision in the industry on how to improve transferability for mobile communication signals.

Thermochromic windows: Thermochromic windows can adjust their transparency based on temperature changes. They have the potential to reduce energy consumption by controlling solar heat gain and maintaining thermal comfort. In US17341498A, an energy-efficient, thermochromic device for windows is provided, that allows sunlight or solar radiation into a building or structure when the ambient temperature is low and substantially blocks solar radiation when the ambient temperature is high, especially when sunlight is directly on the window. High transmission windows are desirable for providing an "open air" feeling to building occupants, significant solar or passive heat gain when the outdoor or ambient temperature is low and windows are desirable for allowing visible light into a building or structure to provide daylighting and thereby substantially reduce the need for electric lighting during the time when occupants are most often present. On the other hand, windows can allow excessive amounts of solar heat when the outdoor or ambient temperature is high and air cooling or conditioning is already in use. This is especially true at certain times of the day and certain parts of a building when the solar radiation is shining directly on or through the windows.

Thermochromic windows offer various advantages, such as energy efficiency and glare reduction, but there are also some huge disadvantages associated with this technology: limited colour options; slow response time. Some thermochromic materials have a relatively slow response time when it comes to changing their tint or opacity in response to temperature variations. The transition between different states may take several minutes or longer. This slow response time may not be suitable for situations that require rapid adjustments or immediate control over the level of transparency. Thermochromic windows often exhibit a transition in tint or opacity when the temperature exceeds a specific threshold, such as 50 degrees Celsius. This limited temperature range for the transition can be considered a disadvantage, as it restricts the functionality and effectiveness of the windows in environments with lower temperature fluctuations or when precise control over transparency is desired within a narrower temperature range.

Depending on the specific technology and materials used, thermochromic windows are more expensive compared to traditional window options. The manufacturing processes, specialized materials, and integration of control systems may contribute to higher costs, limiting their widespread adoption in some markets.

Electrochromic windows can dynamically change their transparency in response to electrical signals. They have gained significant attention for their ability to control solar heat gain and glare while maintaining natural light. Advances in materials and manufacturing techniques have improved the performance, durability, and aesthetics of electrochromic windows. The invention DE10311183A·(2003-03-12) is related to an organic electrochromic component, for example, a so-called smart window and/or a display having extended serviceable life. According to the invention, the conventional liquid electrolyte, which had been protected from environmental influences by using complex sealing techniques, is replaced by a solid electrolyte that is more stable and easier to process.

However, they have some disadvantages limiting further expansion to the market.

Cost: Electrochromic windows are more expensive than traditional windows. The technology involved, including the electrochromic materials and control systems, can significantly increase the overall cost of installation.

Complexity: Electrochromic windows require a more complex design and installation process compared to regular windows. They involve integrating electronic components, control systems, and power sources, which can make the installation and maintenance more intricate.

Limited transparency: Electrochromic windows typically have limited transparency. While they can transition between clear and tinted states, the level of tinting may not offer as much control as other window shading systems. This limitation may impact user preferences for natural light and privacy.

Response time: The response time of electrochromic windows can be relatively slow compared to other window technologies. Switching between transparent and tinted states may take several minutes, which could be a drawback in situations where rapid adjustments are needed.

Durability and lifespan: The long-term durability and lifespan of electrochromic windows are still being studied. Some concerns include the stability and degradation of electrochromic materials over time, potential colour fading, and the impact of environmental factors on their performance.

Maintenance: Electrochromic windows may require specialised maintenance and repairs. If any of the electronic components or control systems fail, it might be necessary to contact a trained technician or professional for servicing, which could add to the overall cost and inconvenience.

Power dependency: Electrochromic windows rely on a power source to operate. In the event of a power outage or failure, the windows may not function correctly. Additionally, the energy required to power the windows can increase overall energy consumption in buildings.

Suspended Particle Device (SPD) windows: SPD technology allows windows to switch between transparent and opaque states through the application of an electric current. These windows offer privacy, glare control, and energy efficiency benefits. Ongoing research focuses on improving the switching speed, durability, and colour neutrality of SPD windows. In US85128510A, a fenestration product in accordance with an embodiment of the present application includes an insulated glass unit with a frame, an SPD film mounted in the frame and a pane of glass mounted in the frame adjacent to the SPD film with a gap formed between the pane of glass and the pane of glass. The gap is preferably filled with Argon gas. The technology has several huge issues:
Limited switching speed: SPD windows may have relatively slow switching speeds when transitioning between transparent and opaque states. This slower response time could be a disadvantage in applications where rapid adjustment is required, such as in rapidly changing lighting conditions or in response to user preferences.
High power consumption: SPD windows typically require a constant power supply to maintain their desired transparency level. This power consumption can be a drawback, especially in situations where energy efficiency is a key concern.
Limited durability: Over time, SPD windows may experience wear and tear, leading to a degradation in their performance. The suspended particles within the window may settle or clump together, resulting in uneven transparency or reduced switching capability. This limited durability could be a drawback in terms of long-term reliability and maintenance costs.
Complexity and cost: SPD windows involve intricate technology, including suspended particles, electric fields, and control systems. The complexity of the manufacturing process and the associated components can result in higher production costs compared to traditional window options. This higher cost might limit their widespread adoption, especially in budget-sensitive applications.
Optics limitations: SPD windows may have certain limitations in terms of optical characteristics. In their opaque state, they may scatter light rather than block it completely, leading to reduced clarity and visibility. This scattering effect might be undesirable in situations where precise light control or privacy is crucial.

Another method for dimming glass can be a light scattering technique. Light scattering involves incorporating microscopic or nanostructured elements into the glass to achieve the desired dimming or opacity effect. These elements are designed to scatter or diffuse light when activated, thus reducing the transparency of the glass. Normally, the glass pane is transparent but, illuminated through its edges, the glass pane becomes opaque due to intensive scattered light. The light scattering could happen by the interaction of the illumination beam with light-scattering elements.

Microscopic elements: Microscopic elements are typically tiny particles or features embedded within the glass. They can be of various shapes and sizes, such as microspheres, microprisms, or microtextures. These elements are positioned within the glass to scatter incoming light in different directions, thus reducing the overall transmission of light through the glass. When the light hits these microscopic elements, it is scattered, leading to a diffused or opaque appearance. The specific arrangement and properties of these elements determine the degree of dimming or opacity achieved.

Nanostructured elements: Nanostructured elements are even smaller than microscopic elements. They can be nanocrystals, nanowires, or nano-textures incorporated into the glass. Nanostructured elements interact with light at the nanoscale, causing scattering and diffraction effects. By controlling the size, shape, and distribution of these nanostructures, it is possible to manipulate the behaviour of light passing through the glass. When activated, these nanostructured elements interfere with the light, resulting in reduced transparency and a dimmed or opaque appearance.

The design and fabrication of these microscopic or nanostructured elements require careful consideration to achieve the desired optical properties. The arrangement, density, and orientation of the elements play a crucial role in controlling the scattering effect. Additionally, the choice of materials for these elements is essential to ensure their compatibility with the glass and their durability over time.

In JP2010281986A, a method for fabrication of diffusion film to provide a light diffusion film which is excellent in both light transmittance and light diffusibility.

However, the method is possible on films only and the fabrication has a high cost.

Another feature of Smart windows is integrated lighting and LED matrix display functions. EP3015915A1 discloses a display integration in a window: A display device is mounted on the inside of a window pane and uses both the light coming through the window pane and the light from LED light sources as the backlight of a transmissive display screen to generate an image. A smart window, i.e. a switchable mirror whose degree of reflection for light can be adjusted, is placed between the screen and the window pane, with the LED light sources between the screen and the smart window located. The LED light sources are controlled by means of an optical sensor, which detects the light hitting the screen, in such a way that the intensity of the entire backlight, i.e. the light falling on the screen, is kept essentially constant. The invention relates to a display device for writing and images for attachment to panes, which are exposed to light of varying intensity from the rear, comprising an electric screen which has LED lighting located behind the rear in the viewing direction. This object is achieved according to the invention in that there is a smart window which is arranged parallel to the screen at such a distance that the LED lighting is positioned between the screen and the smart window, that there is an optical sensor for detecting the incident light, which controls the intensity of the LED lighting in such a way that the light intensity hitting the back of the screen is essentially constant.

The patent application CN105185263A discloses a foldable solar energy LED display screen installed on a window and an installation method for the foldable solar energy LED display screen. The display screen comprises a foldable solar panel, a roll-up LED display screen, a window body, a rechargeable battery and a control switch; one end of the roll-up LED display screen is fixed to the inner side of the upper edge of a window frame of the window body, the other end of the roll-up LED display screen stretches freely, the control switch is connected between the rechargeable battery and the fixed end of the roll-up LED display screen, one end of the foldable solar panel is fixed to the outer side of the upper edge of the window frame of the window body, the other end of the foldable solar panel stretches freely, the fixed end of the outer side of the upper edge of the window frame is connected with the rechargeable battery, the foldable solar panel is used for converting luminous energy into electric energy and transmitting the electric energy to the rechargeable battery, the rechargeable battery supplies the electric energy to the roll-up LED display screen for use, the inner side and the outer side of the lower edge of the window frame of the window body are each provided with two or more hooks, and a carrier of the roll-up LED display screen is a curtain. By means of the foldable solar energy LED display screen, energy can be effectively saved, and high market application value is achieved.

According to this patent application, a solar panel and window with an integrated LED display share the area of the wall. Moreover, the implementation of the functionalities requires additional layers for the circuit. No any of the mentioned states of the art can produce a circuit straight on the glass surface.

The existing technologies in the field of smart windows, such as electrochromic windows, suspended particle device (SPD) windows, thermochromic windows, and low-emissivity (low-E) windows, have made significant advancements in terms of energy efficiency, control of light transmission, and functionality. However, these technologies also have their limitations and drawbacks, which pose technical challenges that need to be addressed. Integration of multiple functionalities into window glazing makes it a complex device which needs sophisticated technologies to manufacture.

### Technical problem to be solved

The present invention aims to increase the efficiency and functionality of the multifunctional smart window while simplifying its design and manufacturing process.

### Disclosure of the essence of the invention

In order to solve the above problem, there is proposed a multifunctional smart window comprising a first glass pane with a low emissivity metal coating for reflecting infrared and thermal radiation and enhancing energy-saving properties of the window, a means for dimming of the window by controlling transmission of an incident solar light, a means for displaying customisable visual content by micro-LED arrays integrated on a glass pane, wherein the smart window is provided with multiwavelength resonant antennas, which are configured in the low emissivity metal coating of the first glass pane ensuring selective transmission of electromagnetic waves through the metal coating at mobile communication frequency bands for mobile connectivity within buildings;
the means for dimming the window is configured in a second glass pane to change transmission of an incident solar light by light scattering or absorption;
electrically conductive tracks formed directly on the surface of a third glass pane to provide electrical connectivity for integrated micro-LED arrays and/or additional electronic components.

Multiwavelength resonant antennas are inscribed into the low-emissivity metal coating by laser patterning.

The micro-LED arrays are arranged on the edges of the second glass pane for controllable dimming of window transparency by scattering micro-LED lighting.

The means for dimming the window is light-scattering elements inscribed inside the second glass pane.

The light-scattering elements inside the second glass pane are formed by laser modification of the glass refractive index.

The means for dimming the window is light-scattering elements imprinted on the surface of the second glass pane.

The light-scattering elements on the glass pane surface are formed by a pulsed laser ablation process.

Transversal dimensions of the light-scattering elements in the plane of the glass pane are of sub-10 micrometer size, making them invisible without illumination through the edges of the second glass pane.

The light-scattering elements are arranged in such a way that the light is scattered only into one side of the second glass pane outdoor or indoor.

The light-scattering elements are randomly distributed in the second glass pane area to avoid interference.

A width of the electrically conductive tracks on the glass surface of the third glass pane is less than 5 micrometers.

The first glass pane (1"), second glass pane (1") and third glass pane (1‴) are assembled into a single piece by a frame.

Wire or wireless connection is provided to control the integrated micro-LED arrays remotely for window dimming and visual content representation.

A means to communicate with building energy management systems to dynamically control window properties based on occupancy, daylight availability, and weather conditions, optimizing energy consumption and indoor comfort.

### Advantages of the invention

The proposed invention presents a comprehensive solution for smart and energy-efficient window systems utilising advances in laser technologies

Selective transmission of mobile frequency bands: A technical problem is the selective transmission of mobile frequency bands through low-E smart windows. The integration of electronic components in windows should not interfere with the transmission and reception of mobile signals, ensuring reliable and uninterrupted connectivity for mobile devices within buildings. The challenge is to design the window system in a way that selectively allows the transmission of mobile frequency bands while maintaining the desired functionality and energy efficiency of the smart window.

From the perspective of the building's energy efficiency, windows are one of the weakest links, causing unwanted energy exchanges with the environment both in the cold and warm seasons. As the requirements for energy-efficient houses became stricter, low-emission glasses covered with a thin metal coating began to be used. High energy-efficient window glass has an additional metal coating to reduce indoor energy loss via infrared irradiation. The coatings are designed to reflect the infrared irradiation reducing the indoor-outdoor heat energy transfer. Unfortunately, the transmission of Low-E windows is also reduced for mobile phone signals in the range of 800 MHz - 2.2 GHz.

In order to overcome this issue, the metallic coating on the glass is subjected to laser structuring - formation of a specific periodic pattern in order to form a band-pass filter in the range of 800 MHz - 2.2 GHz. Firstly, the band-pass filter pattern is modelled according to the designated wavelength range, coating material and glass thickness. Further, laser structuring introducing ultrashort pulsed laser is performed on glass/metal structure to selectively remove the metal coating without damaging the glass substrate. This way, openings are ablated in the metal film. The openings act as resonant antennas, enhancing transmission for dedicated wavelength. The laser-structured metallic coating is formed significantly increasing the transmission of electromagnetic waves in the desired wavelength range. Usually, narrow lines are ablated with laser and relatively large metallic islands are preserved contributing to low reflectivity losses of thermal infrared irradiation.

Window dimming to clear/opaque states is proposed by light scattering. The light scattering_and manipulation are usually made by free-standing optical elements integrated into the system to realise desirable visual effects. In the case of smart window application, such an approach is not possible since such properties as window dimming or other visual effects require the integrated optical surfaces directly in the window glass. The challenge is to fabricate such elements inside window glass and reach desirable optical effects. The technical problem is to create multiple, randomly distributed light-scattering elements inside the window glass or on its surface in order to obtain the desired optical effect and do not alter significantly visibility through the window (transmission, image disturbance).

A laser ablation process is employed to form optical microstructures, prisms, and diffusers on the glass surface, resulting in light scattering and rendering the glass opaque when lighting is applied solely from the edge through integrated LED elements. Glaring outside makes the window opaque from an observer outside the building. The light-scattering elements could be manufactured in such a way that no scattering light goes inside the building, leaving the window transparent for a person inside. When the LED is turned off, the glass returns to a transparent state.

Electrically conductive tracks on glass surfaces: One of the challenges in developing smart windows is the formation of "invisible" electrically conductive tracks on glass surfaces. Efficient and reliable electrical connections are required to power the integrated electronic components, such as micro-LED arrays and sensors, and enable their proper functioning. The technical problem is to develop a method or structure that allows for the creation of durable and low-resistance electrically conductive tracks on glass surfaces, ensuring efficient electrical connectivity throughout the window system.

Circuitry for LED connection on glass edges for dimming and whole glass pan for micro-LED display functionality is produced by laser-initiated selective electroless plating on glass [US10982328 (B2)] or a similar process. Surface activation by an ultrashort pulse laser allows to achievement of very narrow metal lines with a micrometre-scale pitch.

A controller is integrated into the window frame, allowing users to select and control the desired image or content displayed by the micro-LED array. The control would be accessible via a mobile phone or other means of user interface.

By addressing these technical problems, the present invention aims to provide a comprehensive solution for smart and energy-efficient window systems, overcoming the limitations of existing technologies and offering enhanced functionality, durability, and control over light transmission while promoting energy efficiency

### Brief description of the drawings

Fig.1 shows a cross-section of the proposed multifunctional smart window with three glass panes and integrated functional elements.
Fig.2A shows a cross-section of the second glass pane with light-scattering elements configured on the middle of the second glass pane.
Fig.2B shows a cross-section of the second glass pane with light-scattering elements configured on the surface of the second glass pane.
Fig.3A shows a sketch of mesh-like structures in metallic low-emissivity coating on a first glass pane acting as a resonant antenna for electromagnetic waves used in wireless and mobile communication.
Fig.3B shows the transmission spectrum of metal-mesh structures of Fig. 3A, with characteristic dimensions W1, L2, L3 and K3, ablated in the metal film.

### Invention implementation examples

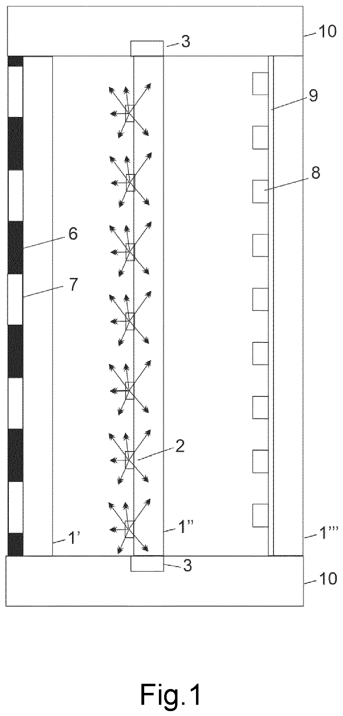

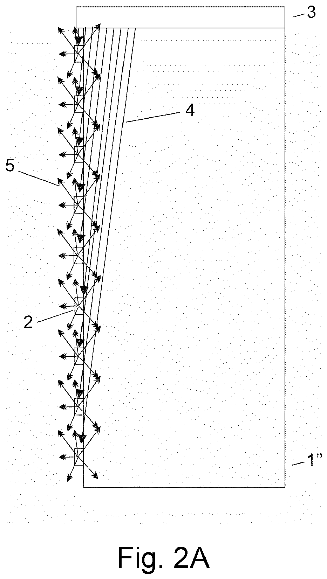

A multifunctional smart window according to the proposed invention has three (first, second and third) glass panes (1', 1", 1 ‴) (Fig.1). Light-scattering elements 2 are configured on a surface or inside of the second glass pane 1" and LEDs 3 are installed on its edges. The second glass pane (1") with light-scattering elements (2) on the glass surface (Fig.2A) is made by laser ablation and laser polishing. The window is dimmed (becomes opaque due to glare) when LEDs are switched ON and scattering light prevents from visibility through the window. A light 4 coming from the edge-mounded LEDs 3 is scattered by the light-scattering elements 2. A scattered light 5 prevents visibility through the window (dimming). Transversal dimensions of the light scattering elements depend on the laser beam focusing and could be made smaller than 10 micrometers, making them invisible without additional illumination.

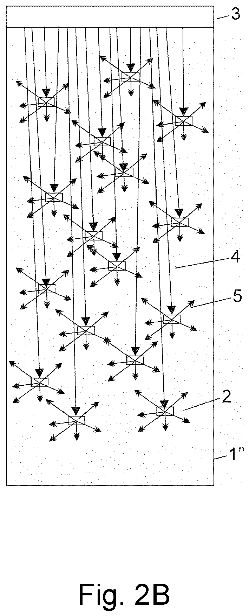

The second glass pane (1") with light-scattering elements (2) inside the second glass pane (1") (Fig.2B) is made by laser-induced modification of refractive index of the glass, nanograting formation inside the glass or nanovoid formation in the glass, depending on selected laser pulse energy and laser beam scanning speed during the glass modification process.

A low-emissivity metal coating 6 is deposited on the first glass pane 1' and openings in the metal film 6 are laser- ablated in the shape of resonant antennas 7.

Micro-LED arrays 8 to display visual content are mounted on a metallic connector grid 9 on the third glass pane 1‴. The window is assembled into a single device with a frame 10.

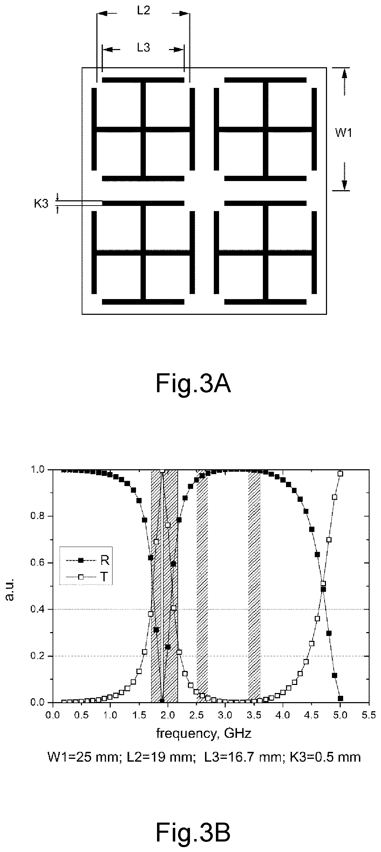

Sketch of mesh-like structures in metallic low-emissivity coating on a glass pane acting as a resonant antenna for electromagnetic waves used in wireless and mobile communication is presented in Fig. 3A. Narrow lines are ablated with a laser and relatively large metallic islands are preserved contributing to low reflectivity losses of thermal infrared irradiation.

The transmission spectrum of metal-mesh structures of Fig. 3A, with characteristic dimensions W1, L2, L3 and K3, ablated in the metal film is presented in Fig. 3B. Significant increase in the transmission of close to 100% for electromagnetic waves at the design wavelength of 1.9 GHz was measured.

The resonant antennas in low-E glass coating are inscribed by laser ablation. Periodical structures are ablated in the metal film creating resonant, high-transmission bands for electromagnetic waves used for wireless and mobile communication.

The light-scattering elements are formed on the surface of the glass pane by direct laser ablation with consequential laser polishing using a CO₂ laser. The light-scattering elements can be micro-prisms, gratings or other geometrical elements that efficiently redirect an illumination light, coming from LED mounted on the edges of the glass pane, making the glass pane a glaring surface (Fig. 2A).

Optionally, the light-scattering elements can be fabricated inside the glass pane by making intra-volume glass modification with a focused ultrashort laser beam. The intra-volume modification can be refraction index modification, nanogratings or voids (TYPE I, II or II modifications), orientated across the glass pane (Fig.2B) which makes them invisible in the OFF state without side illumination by integrated LEDs.

High energy-efficient window glass has an additional metal coating to reduce indoor energy loss via infrared irradiation. The coatings are designed to reflect the infrared irradiation reducing the indoor-outdoor heat energy transfer. Unfortunately, the transmission of Low-E windows is also reduced for mobile communication signals in the range of 800 MHz - 2.2 GHz. In order to overcome this issue, the metallic coating on the glass is subjected to laser structuring - formation of a specific periodic pattern in order to form a band-pass filter in the range of 800 MHz - 2.2 GHz. Firstly, the band-pass filter pattern is modelled according to the designated wavelength range, coating and glass thickness. Fig.3A shows a mesh-like band pass filter geometrical structure on metallic coating. The band-pass filter performance in terms of radiation filtering is shown in Fig.3B. The filter properties can be adjusted by controlling the mesh geometrical properties.

Further, laser structuring introducing ultrashort pulsed laser is performed on glass/metal structure to selectively remove the metal coating without damaging the glass substrate. This way the laser-structured metallic coating is formed significantly increasing the transmission of electromagnetic waves in the desired wavelength range. Usually, narrow lines are ablated with laser and relatively large metallic islands are preserved contributing to low reflectivity losses of thermal infrared irradiation.

The laser structuring is based on the ablative process with an ultrashort high-power laser. A high-power picosecond laser source (Atlantic, EKSPLA) was used for the selective metal coating removal process. The coating structuring process includes the use of at least one galvoscanner with a combination of XYZ translation stages to structure large areas. Parallel laser beam processing is beneficial in this case to significantly increase the structuring speeds for large areas. A single laser beam of 1064 nm wavelength, 10 ps pulse duration, 100 kHz pulse repetition rate and 1m/s scanning speed was used to form the required mesh-like structure on the Low-E metallic coating.

### Example 2

Hybrid nanosecond-picosecond laser (EKSPLA) was used for laser ablation of light-scattering elements on the glass surface In order to reduce the roughness of glass surfaces after laser ablation (100 nm), the laser polishing process using solid-state nanosecond and CO₂ laser sources was applied.

In order to obtain uniform or controlled glare of the glass surface, various structures affecting the direction of light propagation are required, such as integrated light diffusers, integrated light focusing optics, etc. Integration of LEDs on glass pane edges was employed to achieve opacity in the glass through applied lighting. The control of LED lights for opacity and dimming functions is accomplished using a CPU control unit. The lighting was integrated into the window frame by forming integrated circuits and optical structures directly on glass.

For this specific task, the combination of short and ultrashort pulsed lasers can be used to laser form specific structures for light guiding and manipulation such as diffusive surfaces, window glass integrated optical lenses, reflectors and cavities for LED arrays. In the case of LED array integration, the short (nanosecond) laser processes can be applied for glass milling and ablation of various shape cavities. Further, ultrashort (picosecond or femtosecond) laser pulses can be applied to laser mill optical surface substrates. Even with ultrashort pulsed lasers, the laser-milled surface roughness can be reduced to a few hundred nanometers. Such a surface is good for light scattering applications but it is not useful for light transmission or light manipulation applications. For this, additional CO₂ laser polishing can be applied to further reduce the surface roughness. The initial ultrashort pulsed laser ablated surface roughness can be reduced up to 15 times by applying CO₂ laser polishing.

The CO₂ laser polishing introduces additional laser melting of the ultrashort laser ablated area smoothing the diffusive surface. This way the CO₂ laser polished surface roughness can be reduced to tens of nanometers which is exceptionally good for visible light applications. The laser-formed elements can be formed directly in the window glass for light guiding and diffusion applications together with integrated LED solutions.

### Example 3

Femtosecond laser Pharos (LIGHT CONVERSION) was used for glass volume modification in order to form integrated light-scattering elements.

In addition to subtractive laser processing (laser milling, polishing), intra-volume optical elements can be formed by an ultrashort pulsed laser via laser-induced refractive index change or intra-volume damage. These elements can be obtained by focusing the laser beam inside the volume of glass. Refractive index change manipulations can be applied for light guiding and forming applications without subtractive material removal which can have additional visual benefits especially if these elements need to be formed close to the window center. For light scattering applications, intra-volume modifications (cracks or other means of glass damage) can be obtained. Arrays of these laser-formed modifications can act as diffusive surfaces as well.

### Example 4

The main problem of integrating electronics on the glass surface is to form electrically conductive tracks with good adhesion to the surface. Applying these laser technologies opens up opportunities to create a "smart window" system (smart windows). Such a system should have an integrated (RGB) micro-LED array on the glass surface, which should be almost invisible to the natural eye, and a controller integrated into the window frame would allow the selection of the desired image created by this LED screen, which could be controlled directly from a mobile phone. This could have a wide application in the field of advertising, where downtown buildings with glass facades could individually form the necessary inscriptions, images or even video reports. Turning off the LED array would make the window look normal.

Firstly, the electronic circuit is formed straight on a glass surface using Selective Surface Activation Induced by the Laser method [US10982328 (B2)].

The first step is irradiation surface areas of an item made of inorganic dielectric or semiconductor which are intended to be deposited by a metal with an ultrashort pulse laser. Areas provided for metallisation are irradiated with an ultrashort pulse laser. Pulse duration comprises from 0.005-500 picoseconds. The laser wavelength comprises the infrared, visible and ultraviolet ranges. Irradiation dose is from 0.01 to 200 J/cm².

After laser surface treatment the surface of the item is treated in an activation bath. Before the activation bath, the item can be optionally rinsed with water. The activation bath must include an aqueous solution of metal salt comprising but not limited to silver nitrate AgNO₃ or silver ammonia complex Ag(NH₃)₂, which a concentration is in the range of 0.0000001-1 M and a temperature being 15-60°C. Metal ions are adsorbed on said laser-treated areas. In the case of silver nitrite or silver ammonia complex, the metal ions are silver ions. Hydroxy groups localised on laser-treated areas preferentially react with metal ions like Ag⁺ to yield Ag₂O, and then these Ag₂O particles are reduced to metallic Ag by R-OH, for example, ethanol in the presence of residual hydroxide ions.

Laser-treated and chemically-activated areas are metallised during this step. The said bath contains chosen metal ions (for example, copper), a ligand, a reducing agent and a buffer. Various metals: copper, silver, nickel, platinum, palladium, etc., can be used for deposition. The copper plating bath contains copper sulphate Cu₂SO₄ in the concentrations of 0.005-0.25 M (copper source), formaldehyde in the concentration of 0.0015-6 M (reducing agent), ligand chosen from the group of polyols, hydroxy-polycarboxylic acids, polyamine-polycarboxylic acids, polyamine-polyhydroxy compounds comprising: glycerol, citric acid, isomers of tartaric acid, EDTA, DTPA, CDTA, N,N,N',N'-Tetrakis (2-Hydroxypropyl)ethylenediamine, in the concentrations of 0.15-0.6 M. The electroless copper plating bath contains in addition sodium carbonate Na₂CO₃ in the concentrations of 0.05-0.6 M and sodium hydroxide NaOH in the concentrations of 0.1-2 M - as a buffering environment at pH-values of 12-13. The temperature of the electroless copper plating bath during the process ranges from 5-90°C.

As an example, the chemical metallisation solution may consist of 0.12 M copper sulphate (Cu_{S}O₄), 0.25 M N,N,N',N'-Tetrakis (2-Hydroxypropyl)ethylenediamine ([CH₃CH(OH)CH₂]₂NCH₂CH₂N[CH₂CH(OH)CH₃]₂), 1.25 M sodium hydroxide (NaOH), 0.3 M sodium carbonate (Na₂CO₃) and 0.34 M formalin. The pH value is kept at 12.7. The temperature of the plating process is 30°C.

To prevent copper oxidation, nickel/gold overcoat electroless deposition was applied.

After the circuit is produced on the glass pane surface the solder mask procedure is applied, followed by the SMD assembling process and soldering reflow. Control electronics were assembled in the frame of the window.

All examples included assembly of the window glazing into a panel for installation.

## Claims

1. A multifunctional smart window comprising:
- a first glass pane (1') with a low emissivity metal coating (6) for reflecting infrared and thermal radiation and enhancing energy-saving properties of a window;
- a means for dimming of the window by controlling transmission of an incident solar light;
- a means for displaying customisable visual content by micro-LED arrays integrated on a glass pane,
**characterised in that**
the smart window is provided with multiwavelength resonant antennas (7), which are configured in the low emissivity metal coating (6) of the first glass pane (1') ensuring selective transmission of electromagnetic waves through the metal coating at mobile communication frequency bands for mobile connectivity within buildings;
the means for dimming the window is configured in a second glass pane (1") to change transmission of an incident solar light by light scattering or absorption;
electrically conductive tracks formed directly on a surface of a third glass pane (1‴) to provide electrical connectivity for integrated micro-LED arrays and/or additional electronic components.

2. Smart window according to claim 1, wherein the multiwavelength resonant antennas (7) are inscribed into the low-emissivity metal coating (6) by laser patterning.

3. Smart window according to claims 1, wherein the micro-LED arrays (3) are arranged on edges of the second glass pane (1") for controllable dimming of window transparency by scattering micro-LED lighting.

4. Smart window according to claim 1, wherein the means for dimming the window is light-scattering elements (2) inscribed inside the second glass pane (1").

5. Smart window according to claim 4, wherein the light-scattering elements (2) inside glass pane (1") are formed by laser modification of the glass refractive index.

6. Smart window according to claim 1, wherein the means for dimming the window is the light-scattering elements (2) imprinted on a surface of the second glass pane (1").

7. Smart window according to claim 6, wherein the light-scattering elements (2) on the glass pane (1") surface are formed by a pulsed laser ablation process.

8. Smart window according to claims 1, 3-7, wherein transversal dimensions of the light-scattering elements (2) in the plane of the glass pane (1") are of sub-10 micrometer size, making them invisible without illumination through the edges of the glass pane (1").

9. Smart window according to claims 1, 3-8, wherein the light-scattering elements (2) are arranged in such a way that the light is scattered only into one side of the second glass pane (1") outdoor or indoor.

10. Smart window according to claims 1, 3-8, wherein the light-scattering elements (2) are randomly distributed in the second glass pane (1") area to avoid interference.

11. Smart window according to claim 1, wherein a width of the electrically conductive tracks on the glass surface of the third glass pane (1 ‴) is less than 5 micrometers.

12. Smart window according to any one of claims 1-11, wherein the first glass pane (1"), the second glass pane (1") and the third glass pane (1‴) are assembled into a single piece by a frame.

13. Smart window according to claim 1, wherein wire or wireless connection is provided to control the integrated micro-LED arrays remotely for window dimming and visual content representation.

14. Smart window according to claim 1, further comprising a means to communicate with building energy management systems to dynamically control window properties based on occupancy, daylight availability, and weather conditions, optimizing energy consumption and indoor comfort.
